# EUROPEAN PATENT APPLICATION

(11) **EP 3 847 882 A2**
(43) Date of publication of application: **14.07.2021**
(21) Application number: 20215246.8
(22) Date of filing: 11.09.2019
(51) Int. Cl.: A01D 34/73, C21D 9/22

(54) **CUTTING BLADE FOR A ROBOTIC WORK TOOL**

(30) Priority: 13.09.2018 SE 1851080
(62) Divisional of application: 19769422.7
(71) Applicant: HUSQVARNA AB, 561 82 Huskvarna (SE)
(72) Inventor: JOHANSSON, Jörgen, 55339 JÖNKÖPING (SE)

(57) **Abstract**

A cutting blade (100) adapted to be carried by a tool holder (20) provided in a robotic work tool (10), the cutting blade (100) comprising a blade body (110) and a cutting edge (120, 121) extending along at least a portion of the periphery (111) of the blade body (110), and a circular hole configured to receive a pin (30) for attaching the cutting blade (100) to said tool holder (20). The hardness of the cutting blade (100) decreases in direction from the cutting edge (120, 121) towards the center (125) of the blade body (110) such that the hardness of the cutting edge (120, 121) is higher than the hardness of at least a center portion (126) of the blade body (110). The present disclosure also relates to a method for manufacturing a cutting blade.

## Description

### TECHNICAL FIELD

The present disclosure relates to a cutting blade for a robotic work tool, such as a lawnmower.

The present disclosure also relates to a method for manufacturing a cutting blade for a robotic work tool, such as a lawnmower.

### BACKGROUND ART

Robotic lawnmowers are used to cut grass on lawns. Typically, a robotic lawnmower comprises a blade holder in the form of a circular disc which is rotationally attached on the lower side of the chassis above the above the grass surface. Multiple cutting blades are attached to the periphery of the disc and oriented such that their cutting edges facing tangentially to the periphery of the circular disc.

During operation of the lawnmower, the cutting blades may hit hard objects such as rocks on the lawn. The impact between the object and the blade causes wear of the blade edges and may, due to the relatively high rotational speed of the blade, also result in the formation of cracks of the blade or chipping thereof. Damage to the cutting blades may result in impaired cutting quality of the lawn and increased operational cost of the lawnmower.

The problem of wear and cracking of robotic lawnmower cutting blades has been addressed in WO2016/150503 which discloses a lawnmower having cutting blades with an oblong slit. The cutting blades are attached to a respective pin provided on the tool holder such that the pin extends through the oblong slit. The cutting blades may rotate around the pin and also move relative the pin along a path formed by the slit. When the cutting blade hits an object the arrangement of pin and oblong slit allows the blade to move away from the object being hit as well as to rotate and reduces thereby the impact between the blade and the object and thereby the risk for damage to the blade.

There is however still a need for increasing the operational life-time of cutting blades for robotic lawnmowers.

### SUMMARY

Thus, it is an object of the present disclosure to provide a cutting blade for a robotic lawnmower that solves or at least mitigates at least one of the above mentioned problems. In detail it is an object of the present disclosure to provide a robotic lawnmower cutting blade with high resistance to damage caused by impact between the blade an obj ect.

According the present disclosure at least one of these objects is achieved by a cutting blade adapted to be carried by a tool holder provided in a robotic work tool, the cutting blade comprising a blade body and a cutting edge extending along at least a portion of the periphery of the blade body, and a slit arranged to receive a pin for attaching the cutting blade to said tool holder, wherein the cutting blade is movable such that the pin may be displaced within the slit characterized in that, the hardness of the cutting blade decreases in direction from the cutting edge towards the center of the blade body such that the hardness of the cutting edge is higher than the hardness of at least a center portion of the blade body.

In the cutting blade of the present disclosure, the difference in hardness between the cutting edges and the blade body results in high wear resistance and high impact resistance of the cutting edges. Thus, the cutting edges has a good resistance to abrasive wear and good resistance to the formation of cracks caused by impact between the blade and an obstacle. The good resistance to abrasive wear is mainly due to the high hardness of the cutting edges. The high resistance to cracking of the blade is a result of the lower hardness of the center portion of the blade body due to that the softer blade body provides a resilient support for the hard and brittle cutting edge. Therefore, when the cutting edge hits an object, the impact between the blade and the object is at least partially absorbed by the blade body and reduces the risk of cracks in the cutting edge.

In operation, the combination of the structural design of the cutting blade and its hardness distribution contributes to achieving a very high impact resistance in the cutting blade. That is, the slit in the blade allows the blade to move when an object is hit which results in that the risk for crack formation in the blade is reduced. The hardness distribution in the cutting blade reduces the risk for crack formation even further and provides a long operational life length of the cutting blade.

Typically, the cutting blade is elongate and comprises a first and second cutting edge arranged opposite to each other. The slit may thereby extend within the blade body and between the first and the second cutting edge. The cutting edge may be beveled and the blade body extends typically adjacent the beveled cutting .

According to one embodiment of the cutting blade, the cutting edge is integral with the blade body. Such a cutting blade may be manufactured at a low cost in few production steps. The cutting edge may have a hardness of 650 - 850 HV1 and at least the center portion of the blade body has a hardness of 450 - 600 HV1. It has shown that this distribution of hardness provides a blade with good impact and wear resistance. According to one alternative the cutting blade is manufactured of spring steel. These class of steels are readily available and may be hardened by induction hardening to sufficiently high hardness. According to an example, the cutting blade is manufactured of a steel material comprising:
C: 0.70 - 1.30; Mn: 0.30 - 0.90; Si: 0.15 - 0.35; P: ≤0.025; S:≤0.025; Cr: ≤0.40; Mo: <0.10; Ni: <0.40. The remainder is constituted by Fe and unavoidable or natural occurring impurities.

Carbon (C) and manganese (Mn) increases the hardness and the hardenability of the steel material. It is therefore advantageous when the steel material has a carbon content of 1.20 - 1.30 wt% and a manganese content may be 0.3 - 0.6 wt%. A cutting blade made of such a steel, exhibits, after hardening, a good balance between a hard cutting edge and a resilient blade body.

Alternatively, the cutting blade is manufactured of case hardening steel or nitriding steel. Such steels may be hardened by diffusion hardening in carbon- or nitrogen containing atmosphere.

According to a second embodiment, the cutting edge comprises a first steel material and the blade body comprises a second steel material and wherein the cutting edge and the blade body are joined to each other. This is advantageous since it allows for blade with optimized hardness of the cutting edges and optimized resiliency of the blade body. It is thus possible achieve a cutting blade with very high hardness of the cutting edges in combination with a relatively soft and resilient blade body. Typically, the cutting edge has a hardness of 750 - 1000 HV1 and the blade body has a hardness of 450 - 600 HV1.

The first steel material may be a high speed steel. In such embodiment, the second steel material may be carbon steel or alloyed carbon steel. High speed steels (HHS) have very high hardenability and/or the capability of forming hardness increasing carbides or other particles. The high speed steel may thus have a very high final hardness.

For example, the first steel material comprises in weight%:
C: 0.78 - 0.94; Mn: ≤0.45; Si: ≤0.45; P: <0.03; S: <0.02; Cr: 3.75 - 4.50; V: 1.75 - 2.20; Mo: 4.70 - 4.5; W: 5.50 - 6.75; remainder Fe and unavoidable or naturally occurring impurities. Mn may be 0.15 - 0.40 wt%.

For example, he second material may be a steel material comprising (in weight%):
C: 0.29 - 0.33; Mn: 0.90 - 1.1; Si: 0.20 - 0.35; P: ≤0.02; S: ≤0.01; Cr: 3.80 - 4.00; V: 0.30 - 0.40; Mo: 1.0 - 1.2; remainder Fe and unavoidable or naturally occurring impurities.

Optionally, the cutting blade may comprise a wear resistant coating comprising TiN and/or CrN and/or DLC. The coating is typically applied onto at least the cutting edges. The coating increases the wear resistance, and thus the operational life time of cutting blade. The wear resistant coating has proven in particular advantageous in combination with cutting edges of high speed steel. Because the high hardness of the high speed steel cutting edges forms a strong support for the wear resistant coating which thereby adheres stronger to the blade.

Typically, the cutting edge is through-hardened. Thereby is maximum hardness achieved in the cutting edge.

According to an embodiment, the cutting edge comprises cemented carbide and the blade body comprises steel material, wherein the cutting edge and the blade body are joined to each other. Cemented carbide increases significantly the wear resistance of the cutting edges since a hardness of 1000 - 1350 HV1 may be reached.

Optionally, the cutting edge is 2 mm wide.

According to a further aspect the present disclosure also relates a method for manufacturing a cutting blade comprising the steps:
- providing a blade precursor comprising hardenable steel material having an edge portion and a body portion; forming at least one individual slit in the body portion of the blade precursor; hardening at least the edge portion of the blade precursor by heating to austenitizing temperature followed by quenching; grinding a bevel on at least a portion of the edge portion of the blade precursor thereby forming a cutting blade having a cutting edge.

The method may comprising the additional steps of:
- forming multiple individual slits along the body portion of the blade precursor (200) and dividing the blade precursor into multiple cutting blades such that each cutting blade comprises an individual slit. This is an effective method of producing large numbers of cutting blades.

According to an alternative, the blade precursor is a continuous, integral strip of hardenable steel material. The blade precursor is typically heated to a temperature of 780 - 840 °C, preferably 780 - 810°C by induction heating. Induction heating is an effective, space saving heating method which allows for local heating. It is thus advantageous for heating which is essentially the cutting edges of the cutting blade.

According to an alternative the blade precursor is provided by the steps:
- providing a strip of the first steel material and a strip of the second steel material; joining the strip of the first steel material to the strip the second steel material, thereby forming a blade precursor wherein the strip of first steel material forms an edge portion and the strip of the second steel material forms a body portion.

Optionally, the strip of the first steel material is joined to the strip of the second steel material by welding. In some embodiments, wherein a welded joint is created when the first steel material is joined by welding to the strip of the second steel material, the method may comprise the step of:
- surface grinding the welded joint.

The edge portion of the blade precursor may thereby be heated is heated to a temperature of 1200 - 1250°C,

Optionally the method may comprise comprising the step of:
- applying a wear resistant coating onto at least the cutting edge of the cutting blade. The wear resistant coating may comprise TiN and/or CrN and/or DLC. Typically the wear resistant coating may be applied by Physical Vapour Deposition (PVD). This coating technique achieves very thin and dense coatings and achieves thus a highly wear resistant coating.

### BRIEF DESCRIPTION OF THE DRAWINGS

Figure 1: A schematic drawing of a robotic work tool comprising a cutting blade according to an embodiment of the present disclosure.
Figure 2: A schematic drawing of a portion of a tool holder of the robotic work tool shown in figure 1.
Figure 3a: A schematic front view drawing of a cutting blade for a robotic work tool according to an embodiment of the present disclosure.
Figure 3b: A schematic drawing of a cutting blade for a robotic work tool according to an embodiment of the present disclosure in cross-section.
Figures 4a - 4f: Schematic drawings illustrating steps of a method for manufacturing a cutting blade for a robotic work tool according to the present disclosure.
Figure 5: A flowchart showing steps of a method for manufacturing a cutting blade for a robotic work tool according to the present disclosure.

### DETAILED DESCRIPTION OF EMBODIMENTS

The cutting blade for a robotic work tool according to the present disclosure will now be described more fully hereinafter. The cutting blade for a robotic work tool according to the present disclosure may however be embodied in many different forms and should not be construed as limited to the embodiments set forth herein. Rather, these embodiments are provided by way of example so that this disclosure will be thorough and complete, and will fully convey the scope of the present disclosure to those persons skilled in the art. Same reference numbers refer to same elements throughout the description. Wherein, hereinabove or hereinafter, reference is made to "cutting blade" this feature may be nominated "robotic lawnmower cutting blade"

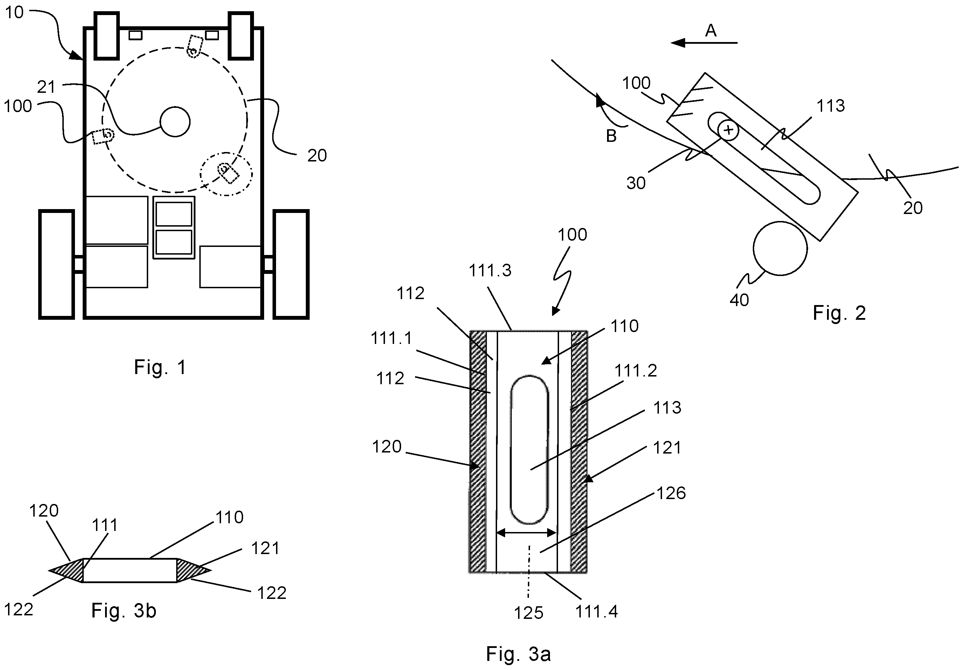

Figure 1 shows a robotic work tool 10 embodied as a robotic lawnmower having at least one cutting blade 100 according to the present disclosure, that is a robotic lawnmower cutting blade 100. The robotic work tool 10 is, apart from the cutting blade 100, identical to the robotic work tool disclosed in WO2016/150503. The robotic work tool 10 is therefore hereinafter only described with reference to features relating to the cutting blades 100. Thus, the robotic work tool 10 comprises a tool holder 20, which is embodied as a cutting blade holder and may be a circular disc. The tool holder 20 is rotationally attached to the robotic work tool 10 and driven in rotational movement around its center axis by a cutter motor 21. The tool holder 20 carries at least one cutting blade 100. However, typically the tool holder 20 carries multiple cutting blades 100 such as three cutting blades 100 as shown in figure 2 or more. The cutting blades 100 are attached along the periphery of the tool holder 20. Figure 2 shows an enlarged view of the encircled portion of the tool holder 20 of figure 1 and an obstacle 40, such as a stone, in the cutting path of the blade 100. Thus, the tool holder 20 comprises at least one pin 30 that extends from the face of the tool holder 20. The pin 30 is arranged at or adjacent the periphery of the tool holder 20. The cutting blade 100, which will be described in detail hereinafter, comprises a slit 113 in which the pin 30 is received. The cutting blade 100 is thereby arranged to be able to rotate around the pin 30 and also able to move relative the pin 30 along a path defined by the extension of the slit 113. The cutting blade may perform one or both of these movements in response to hitting the object 40.

Figure 3a shows a cutting blade 100 according to the present disclosure. The cutting blade 100 may be rectangular and comprises a blade body 110 which may be rectangular and comprises a periphery 111 which comprises opposite long-sides 111.1, 111.2 and opposite short-sides 111.3, 111.4. The cutting blade may be flat, i.e. it may extend in a single plane. The blade body 110 comprises a slit 113 which is configured to receive the pin 30 of the tool holder 20. In figure 3a, the slit 113 extends parallel with the long-sides of the blade body 110. However, other extension of the slit 113 is possible, such as a curved or diagonal extension. In some embodiments, the blade 100 may, instead of a slit 113, have a circular hole which configured to receive the pin 30. The cutting blade 100 further comprises a first cutting edge 120 and a second cutting edge 121 which respectively extend adjacent the long-sides 111.1, 111.2 of the blade body 110 on opposite sides of the blade body 110. Figure 3b shows the cutting blade in cross-section. Thus, the blade body 110 forms the center of the cutting blade which may be of uniform cross section. The first and the second cutting edge 120, 121 extend respectively along the periphery 111 of the blade body 110 and on opposite sides of the blade body. The first and the second cutting edge 120, 121 may have a bevel 122. Thus, seen in cross-section of the cutting blade 110, the beginning of the bevel 122 may define the interface between the first and the second cutting edge 120, 121 and the blade body 110. Thus, the blade body 110 extends along the bevel 122 of the cutting edges 120, 121.

The cutting blade may be 35.5 mm long, 18.7 mm wide and 0.6 mm thick. The cutting edges may be 1-2 mm wide and the bevel is 30° on both faces of the blade.

Returning to figure 3a, the blade body 110 has a center 125 and may also have a center portion 126 which extends from the center 125 of the blade body towards the first and the second cutting edges 120, 121. The blade body 110 may further comprise at least one border portion 112 which may extend at least partially between the center portion 125 and one or both of the cutting edges 120,121. For reasons relating to the manufacturing of the cutting blade 100, the center portion 126 and the border portion 112 may have different material characteristics. For example, in the present disclosure, the cutting edges 120, 121 may be hardened. In the hardening process the cutting edges are heated which may lead to some heat dissipation to the border portion 126 of the blade body 110. The dissipated may lead to partial hardening of the border portion and a hardness increase thereof. However, when the body portion is unaffected the center portion 126 has the same extension as the body portion 110.

According to the present disclosure, the hardness of the cutting blade 100 decreases in direction from the cutting edges 120, 121 towards the center 125 of the blade body 110 such that the hardness of the cutting edges 120, 121 is higher than the hardness of the center portion 126 of the blade body 110.

According to a first embodiment of the cutting blade 100, the cutting edges 120, 121 are integral with the blade body 110. Thus, the cutting edges 120, 121 and the blade body form one single piece of material without, i.e. free of, any joints there between. The, cutting blade 100 may thereby consist of a hardenable steel material such as carbon steel, low-alloy carbon steel or spring steel.

Such steels may be hardened by heating the steel above a predetermined temperature, at which the microstructure of the steel becomes austenitic followed by rapid quenching in e.g. oil, water or gas. During quenching, the austenitic microstructure transform into martensite or bainite or a mixture thereof.

Typically, the cutting blade 100 is subjected to local hardening of the cutting edges 120, 121. The blade body 110 is not subjected to hardening and is therefore less hard than the cutting blades. Typically, at least the center portion 126 of the blade body 110 has an annealed structure of ferrite and perlite and/or cementite.

The cutting edges 120, 121 may therefore have a hardness of 650 - 850 HV1 and at least the center portion 126 of the blade body 110 may have a hardness of 450 - 600 HV1. The resulting hardness of the cutting edges 120 and 121 may be controlled by selection of the steel material for manufacturing the cutting blade. Typically, the cutting edges 120 and 121 are through-hardened

For example, the cutting blade may be manufactured of a steel material comprising (in weight%):
C: 0.70 - 1.30; Mn: 0.30 - 0.90; Si: 0.15 - 0.35; P: ≤0.025; S: ≤0.025; Cr: ≤0.40; Mo: <0.10; Ni: <0.40. The remainder is constituted by Fe and unavoidable or natural occurring impurities.

Examples of such steel material are the steels C75S, C85S, C90S, C100S and C125S of the steel standard SS-EN10132-4

The hardenability increases with increased contents of carbon (C) and manganese (Mn). Therefore, the carbon content may be 1.20 - 1.30 wt% and the manganese content may be 0.3 - 0.6 wt%.

According to a second embodiment of the cutting blade, the cutting edges 120, 121 comprises a first steel material and the blade body 110 comprises a second steel material. The first and second steel materials are steels having different compositions. The cutting edges 120, 121 and the blade body 110 are thereby joined to each other by joints formed by e.g. welding or brazing. If the cutting edges 120, 121 and the blade body 110 are joined to each other by welding, a welded joint may be created. In some embodiments, this welded joint may be grinded down.

According to an example, the first steel material, which forms the cutting edges 120, 121, is a high speed steel (HHS). For example, the first steel material maybe a steel material comprising (in weight%):
C: 0.78 - 0.94; Mn: ≤0.45; Si: ≤0.45; P: ≤0.03; S: ≤0.02; Cr: 3.75 - 4.50; V: 1.75 - 2.20; Mo: 4.70 - 4.5; W: 5.50 - 6.75; remainder Fe and unavoidable or naturally occurring impurities. Mn may be 0.15 - 0.40 wt%.

An example of such a steel material is ASTMI M2 steel, which is commercially available from the company OTAI Special Steel.

According to another example, the steel material comprises (in weight%) :
C: 1.05 - 1.15; Mn: 0.20 - 0.45; Si: ≤0.7; P: ≤0.03; S: ≤0.02; Cr: 3.50 - 4.50; V: 0.95 - 1.5; Mo: 9.0 - 10.0; W: 1.15 - 2.0; Co: 7.75 - 8.75; remainder Fe and unavoidable or naturally occurring impurities.

An example of such a steel material is AISI M42 steel, which is commercially available from the company Böhler-Uddeholm AB.

The second steel material, which forms the blade body 110, may be one of the steel materials described in the first embodiment of the cutting blade of the present disclosure.

Alternatively, the second steel material may be a steel comprising (in weight%):
C: 0.29 - 0.33; Mn: 0.90 - 1.1; Si: 0.20 - 0.35; P: <0.02; S: <0.01; Cr: 3.80 - 4.00; V: 0.30 - 0.40; Mo: 1.0 - 1.2; remainder Fe and unavoidable or naturally occurring impurities.

Typically, the cutting edges 120, 121 are hardened and the blade body is in annealed condition. The cutting edges may be through-hardened.

The cutting edges 120, 121 may have a hardness of 750 - 1000 HV1 and at least the center portion 126 of the cutting body may have a hardness of 450 - 600 HV1.

According to a third embodiment, the cutting edges 120, 121 comprises cemented carbide and the blade body 110 comprises a steel material as disclosed under the first and the second embodiment of the cutting blade according to the present disclosure. Cemented carbide typically comprises particles of tungsten carbide (WC) in a binder of metal alloy, such as nickel-cobalt alloy. Cutting edges of cemented carbide may have a hardness of 1000 - 1350 HV1. An example of a suitable cemented carbide is HC40 which is commercially available from the company Ceratizit.

Optionally, the cutting blades of the three embodiments described hereinabove may comprise a wear resistant surface coating which is applied on at least the cutting edges 120, 121. The coating may for example consist or comprise titanium nitride (TiN) or chromium nitride (CrN) or diamond-like-carbon (DLC) or mixtures thereof.

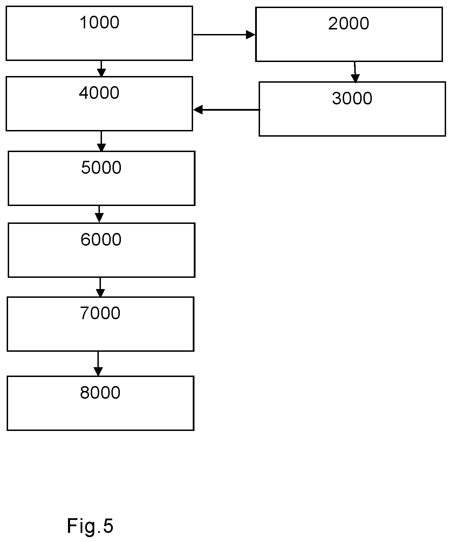

Following is a description of methods for manufacturing the cutting blade according to the first and the second embodiment of the present disclosure. Reference is made to the drawings 4a - 4f and to the flowchart of figure 5. Several steps of the methods for manufacturing the cutting blades according to the first, the second and the third embodiments are identical. Therefore, the method for manufacturing the cutting blade according to the first embodiment is described in detail hereinafter together with differentiating steps of the methods of manufacturing the cutting blade according to the second and the third embodiment where appropriate.

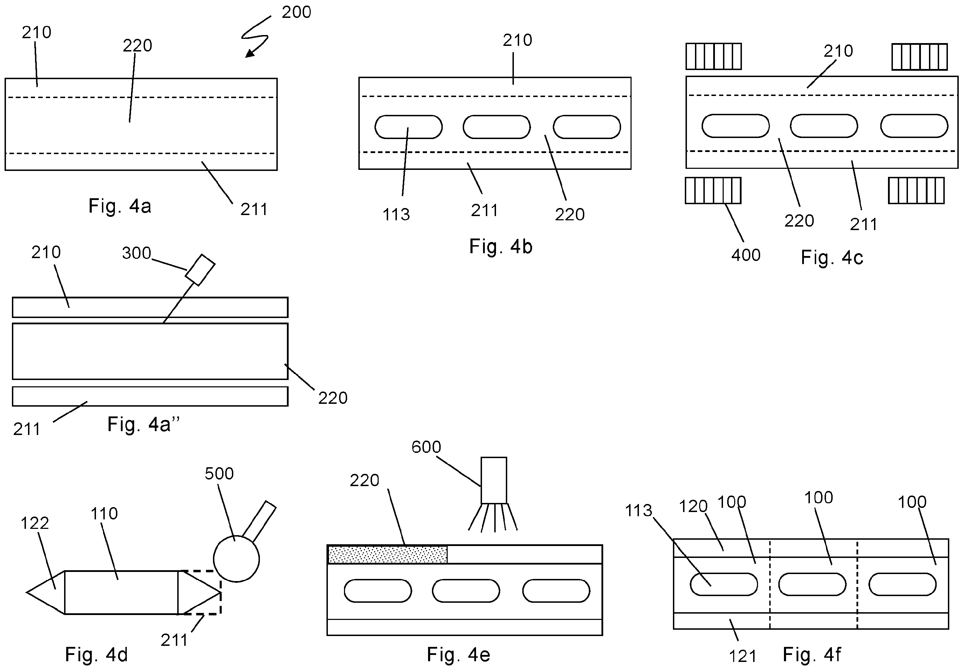

Thus, turning to figure 4a, in a first step 1000 (see figure 5), a blade precursor 200 is provided. For manufacturing the cutting blade of the first embodiment, the blade precursor may be provided as strip of hardenable steel material having a width and a thickness that equals the dimensions of the final cutting blade. In terms of length the strip, i.e. the blade precursor may have a length that equals the length of the final cutting blade. However, for high productivity the length of the strip may equal the total length of multiple cutting blades. The steel material may be selected from the steels disclosed hereinabove. The cutting blade has an edge portion 210, 211which is the portion of the precursor 200 that will form the cutting edge 120, 121 of the final cutting blade. The blade precursor 200 also has a body portion 220 which is the portion of the blade precursor 200 that will constitute the body portion 110 of the final cutting blade.

Turning to figure 4a", showing the step 1000 of providing a blade precursor 200 for a cutting blade according to the second embodiment. In this case, in a step 2000, at least one strip 210 of a first steel material is provided and one strip 220 of a second steel material is provided. In figure 4a" two strips 210, 211 of a first steel material are provided. In a subsequent step 3000, the at least one strip 200 of the first steel material and the strip 220 of the second steel material are joined to each other. One longitudinal edge of the at least one strip 210 of the first steel material is joined to one longitudinal edge of the strip 220 of the second steel material. In figure 4" two strips 210, 211 of the first steel material are provided. One longitudinal edge of the first and the second strip 210, 211 of the first steel material are joined to a respective longitudinal edge of the strip 220 of the second steel material. Joining may be achieved by welding, such as laser welding or friction stir welding or by brazing. The welded joint that may be created when the two materials are joined, may according to some embodiments be grinded down. Thus, the surface of the cutting blade 100 may become completely smooth. This may reduce the risk of the cutting blade 100 to brake, or pieces of the cutting edge 120, 121 to fall off.

Turning to figure 4b, in a subsequent step 4000, at least one individual slit 113 is formed in the blade precursor 200, the slit is typically formed in the body portion 220 of the precursor. The slit 113 may be formed by punching or cutting or other metal cutting techniques. As discussed above, the blade precursor 200 may be of a length equal to the length of multiple cutting blades. In this case multiple 113 slits may be formed along the blade precursor 200. The slits 113 are spaced apart so that one individual slit 113 is located in a final cutting blade.

Turning to figure 4c, in a subsequent step 5000, the blade precursor 200 is hardened by heating at least an edge portion 210, 211 of the blade precursor 200 to austenitizing temperature followed by quenching. The austenitizing temperature is the temperature at which the microstructure of the steel material turns to austenitic. This temperature may be different for different steel compositions and may be found in public reference literature or may be determined by routine experiments. For the spring steels and carbon steels disclosed hereinabove, the austenitizing temperature is 780 - 840 °C, preferably 780 - 810°C. The austenitizing temperature of the high speed steel is 1169 - 1180 °C for M42 type steel and 1200- 1250°C for M2 Type steel. Heating of the blade precursor is typically performed by induction heating apparatus 400, since induction heating allows for local heating of a predetermined edge portion. Quenching may be performed by ejecting or spraying fluid onto the heated edge portion of the blade precursor (not shown).

Turning to figure 4d, in a subsequent step 6000, at least a portion of the edge portion 210, 221 of the blade precursor 200 is ground to form a cutting edge 120, 121. The blade precursor 200 may thereby be ground to form a bevel on one face or on both faces of the blade precursor 200. Grinding may be performed by a grinding machine 500 having a rotating grinding disc. In a case where the dimensions of the blade precursor corresponds to one cutting blade, the blade precursor is now ready to be used as a robotic lawnmower cutting blade.

Turning to figure 4e, in an optional subsequent step 7000, a wear resistant coating 123 may be applied onto at least a portion of the cutting edges 210, 211 of the blade precursor 200. The wear resistant coating 123 may be TiN or CrN or Dimond-Like-Carbide and may be provided by Chemical Vapor Deposition (CVD) or Physical Vapor Deposition (PVD).

Turning to figure 4f, in a case wherein the blade precursor 200 have a length which corresponds to the total length of multiple cutting blades, the blade precursor 200, in a step 8000, is divided into individual cutting blades 100. The blade precursor 200 is thereby divided such that each individual cutting blade 100 comprises a slit 113 and a cutting edge 120, 121. Division of the blade precursor 200 may be performed by metal cutting tools, such as shears or scissors.

While the method steps hereinabove have been described in a certain order, it is obvious that some steps may be performed in another order. For example, it is possible to grind the cutting edges on the blade precursor prior to hardening the blade precursor. It is further possible to first divide the blade precursor into individual cutting blades and then apply a wear resistant coating.

It is further possible to include further steps of heat treating in the method for manufacturing the cutting blade according to the present disclosure. For example, after hardening, the steel precursor may be subjected to a tempering step to make the hardened edge portion less brittle. Tempering may be performed in a temperature range of 250 - 350°C. It is also possible to harden the entire blade precursor and then temper the body portion of the blade precursor in order to achieve a hardness difference between the edge portions and the body portions of the blade precursor and the final cutting blade.

It is further possible to use other hardening methods. For example the blade precursor may be manufactured from a nitriding steel and subjected to nitriding hardening. It is also possible to manufacture the blade precursor from a case hardening steel and subject the blade precursor to case hardening. It is possible to locally harden the edge portions of the blade precursor by masking the body portion such that nitrogen or carbon is prevented from diffusing into the body portion of the blade precursor.

Regarding the manufacturing the cutting blade according to the third embodiment of the present disclosure. The cutting blade according to the third embodiment comprises a blade body of carbon steel and a cutting edge of cemented carbide. The cutting blade may be formed by a method comprising the steps of:
Providing, a blade precursor 200 comprising a body portion 220 comprising a steel material and an edge portion 210, 211 comprising cemented carbide. Typically, the blade precursor is provided by the steps of: providing a strip of steel material and a strip of cemented carbide. In a following step the strip of steel material and the strip of cemented carbide are joined to each other. Joining may be achieved by brazing. Any suitable brazing material may be used, for example a silver-based brazing material.

In the method for manufacturing the cutting blade according to the third preferred embodiment, the steps of hardening the blade precursor 200 are omitted. However, the other manufacturing steps as disclosed under the first and the second embodiment may be applied for manufacturing the cutting blade according to the third embodiment.

## Claims

1. A cutting blade (100) adapted to be carried by a tool holder (20) provided in a robotic work tool (10), the cutting blade (100) comprising a blade body (110) and a cutting edge (120, 121) extending along at least a portion of the periphery (111) of the blade body (110), and a circular hole configured to receive a pin (30) for attaching the cutting blade (100) to said tool holder (20), wherein the hardness of the cutting blade (100) decreases in direction from the cutting edge (120, 121) towards the center (125) of the blade body (110) such that the hardness of the cutting edge (120, 121) is higher than the hardness of at least a center portion (126) of the blade body (110) and wherein the cutting edge (120, 121) comprises a first steel material and the blade body (110) comprises a second steel material and wherein the cutting edge (120, 121) and the blade body (110) are joined to each other.

2. The cutting blade (100) according to claim 1, wherein the cutting blade (100) is elongate and comprises a first and second cutting edge (120, 121) arranged opposite to each other and wherein the circular hole is located in the blade body (110) and between the first and the second cutting edge (120, 121).

3. The cutting blade (100) according to claim 1 or 2, wherein the cutting edge (120, 121) is beveled and the blade body (110) extends adjacent the beveled cutting edge (120, 121).

4. The cutting blade (100) according to claim 3, wherein the cutting edge (120, 121) is ground to form a bevel on both faces of the cutting blade (100).

5. The cutting blade (100) according to any of claims 1 - 4, wherein the cutting edge (120, 121) has a hardness of 750 - 1000 HV1 and the blade body (110) has a hardness of 450 - 600 HV1.

6. The cutting blade (100) according to anyone of claims 1 - 5, wherein the first steel material is a high speed steel.

7. The cutting blade (100) according to claim 6, wherein the second steel material is carbon steel or alloyed carbon steel.

8. The cutting blade according to anyone of claims 1-7 wherein the first steel material comprises in weight%:
| | |
|---|---|
| C: | 0.78 - 0.94 (wt%) |
| Mn: | ≤ 0.40 (wt%) |
| Si: | ≤ 0.45 (wt%) |
| P: | ≤ 0.03 (wt%) |
| S: | ≤ 0.03 (wt%) |
| Cr: | 3.75 - 4.50 (wt%) |
| V: | 1.75 - 2.20 (wt%) |
| Mo: | 4.50 - 5.50 (wt% |
| W: | 5.50 - 6.70 (wt%) |
remainder Fe and unavoidable impurities

9. The cutting blade according to anyone of claims 1 - 8, wherein the second material is a steel material comprising:
| | |
|---|---|
| C: | 0.29 - 0.33 (wt%) |
| Mn: | 0.90 - 1.1 (wt%) |
| Si: | 0.20 - 0.35 (wt%) |
| P: | ≤ 0.02 (wt%) |
| S: | ≤ 0.01 (wt%) |
| Cr: | 3.80 - 4.00 (wt%) |
| V: | 0.30 - 0.40 (wt%) |
| Mo: | 1.0 - 1.2 (wt% |
remainder Fe and unavoidable impurities.

10. The cutting blade (100) according to anyone of claims 1 - 9, comprising a wear resistant coating (123) comprising TiN and/or CrN and/or DLC.

11. The cutting blade according to anyone of claims 1 - 10, wherein the cutting edge (120, 121) is through-hardened.

12. The cutting blade (100) according to anyone of claims 1-11, wherein the cutting edge (120, 121) is 2 mm wide.

13. A method for manufacturing a cutting blade (100) according to anyone of claims 1 - 12, comprising the steps:
- providing (1000) a blade precursor (200) comprising hardenable steel material having an edge portion (210, 211) and a body portion (220);
- forming (4000) at least one circular hole in the body portion (220) of the blade precursor (200);
- hardening (5000) at least the edge portion (210, 211) of the blade precursor by heating to austenitizing temperature followed by quenching;
- grinding (6000) a bevel (122) on at least a portion of the edge portion (210, 211) of the blade precursor (200) thereby forming a cutting edge (120, 121).

14. The method according to claim 13, wherein both faces of the edge portion (210, 211) of the blade precursor (200) are ground to form a cutting edge (120, 121).

15. The method according to anyone of claims 13 or 14 comprising the steps of:
- forming (4000) multiple individual circular holes in the body portion (220) of the blade precursor (200);
- dividing (8000) the blade precursor into multiple cutting blades (100) such that each cutting blade (100) comprises an individual circular hole.

16. The method according to anyone of claims 13 - 15 wherein the blade precursor (200) is provided by the steps:
- providing (2000) a strip of the first steel material and a strip of the second steel material;
- joining (3000) the strip of the first steel material to the strip the second steel material, thereby forming a blade precursor (200) wherein the strip of first steel material forms an edge portion (210, 211) and the strip of the second steel material forms a body portion (220).

17. The method according to claim 16, wherein the strip of the first steel material is joined to the strip the second steel material by welding.

18. The method according to claim 17, wherein a welded joint is created when the first steel material is joined by welding to the strip of the second steel material materials, the method further comprises:
- surface grinding the welded joint.

19. The method according to anyone of claims 16 - 18, wherein the blade precursor (200) is heated to a temperature of 1160 - 1180 °C,

20. The method according to anyone of claims 13 - 19, comprising the step of:
- applying (7000) a wear resistant coating (123) onto at least the cutting edge (120, 121) of the blade precursor 200.

21. The method according to claim 20, wherein the wear resistant coating (123) comprises TiN and/or CrN and/or DLC.
